# FASCICULE DE BREVET EUROPEEN

(11) **EP 0 750 722 B1**
(45) Date de publication et mention de la délivrance du brevet: **04.11.1998**
(21) Numéro de dépôt: 95910705.3
(22) Date de dépôt: 17.03.1995
(51) Int. Cl.: F16B 13/12, E01B 9/18

(54) **GAINE D'ANCRAGE**
ANKERHÜLSE
ANCHORING SLEEVE

(30) Priorité: 18.03.1994 FR 9403223; 22.11.1994 ES 9402985
(43) Date de publication de la demande: 02.01.1997
(73) Titulaire: VAPE RAIL INTERNATIONAL S.A., F-01430 St Martin-du-Fresne (FR)
(72) Inventeur: VANOTTI, Gérard, F-01240 Saint-Paul-de-Varax (FR)
(74) Mandataire: Meylan, Robert Maurice
(86) Numéro de dépôt international: IB9500186
(87) Numéro de publication internationale: WO9525900

(56) Documents cités:
- FR-A- 2 425 014
- GB-A- 2 092 694

## Description

La présente invention a pour objet une gaine d'ancrage destinée à recevoir une vis dans un élément de construction en béton, constituée d'un corps tubulaire en matière synthétique présentant intérieurement un filet correspondant au filet de la vis et, extérieurement, des bossages périphériques d'ancrage et de répartition des efforts, et deux nervures longitudinales, ce corps étant entouré d'une coquille métallique constituée de deux demi-coquilles fixées sur les nervures longitudinales du corps en matière synthétique pour créer un jeu diamétral destiné à absorber les dilatations différentielles plastique-métal-béton.

Des gaines d'ancrage de ce type sont décrites dans les brevets FR 2 425 014 et 2 636 685 au nom du demandeur. Ces gaines peuvent être intégrées dans un élément en béton à sa fabrication ou placées en reprise, avec scellement par résine ou mortier à prise rapide. Ces gaines sont connues des utilisateurs sous la marque PLASTIRAIL et son surtout utilisées pour la fixation de rails sur des traverses en béton. Le corps en matière synthétique de ces gaines est fermé à son extrémité et la coquille métallique entoure complètement le corps en matière synthétique, c'est-à-dire également sa partie supérieure non filetée et son extrémité inférieure, bien que ces zones ne doivent pas supporter d'effort du tirefond. Ces gaines sont livrées avec un bouchon de manière à éviter la pénétration d'eau dans la gaine ou de tout corps étranger, tel qu'une pierre, susceptible de s'opposer au vissage d'un tirefond dans la gaine avec le risque d'éclatement de la gaine et fissuration du béton sous la pression du tirefond. Ces bouchons n'assurent toutefois pas une étanchéité absolue et de l'eau peut pénétrer dans la gaine et s'accumuler au fond de celle-ci. Dans certaines conditions climatiques, cette eau peut geler et former un bouchon de glace contre lequel vient buter le tirefond lors de son vissage dans la gaine. Ce bouchon de glace peut alors avoir le même effet qu'une pierre, c'est-à-dire transmettre la pression du tirefond sur la gaine et sur le béton environnant, avec le risque que la pression exercée entraîne une fissure du béton et une rupture des filetages de la gaine.

La présente invention a pour but d'éliminer les risques exposés ci-dessus et de réduire simultanément le coût des gaines.

A cet effet, la gaine d'ancrage selon l'invention est caractérisée en ce que la coquille métallique s'étend sur une partie seulement du corps en matière synthétique de manière à laisser libre au moins l'extrémité fermée de ce corps et en ce que ladite extrémité fermée est destructible.

La coquille métallique s'étend de préférence uniquement sur la hauteur nécessaire mécaniquement, c'est-à-dire autour de la partie filetée du corps en matière synthétique, ce qui permet de réduire la quantité de métal utilisée ce qui a pour résultat de réduire de manière importante le prix de revient de cette coquille et par là le prix de revient final de la gaine d'ancrage.

Lors de la mise en place de la gaine d'ancrage dans le béton l'extrémité inférieure du corps en matière synthétique est détruite, par exemple par perforation, ce qui permet à l'eau de s'écouler hors de la gaine.

Dans le cas ou l'élément préfabriqué en béton est obtenu par moulage, la perforation peut être assurée par une aiguille fixée dans le moule. Après démoulage, cette aiguille laisse subsister un passage formant puits d'écoulement.

Selon une forme d'exécution, l'extrémité inférieure du corps en matière synthétique est fermée par un embout en matériau destructible, par exemple au moyen d'un solvant approprié. La destruction de cet embout laisse en outre subsister une cavité située au-dessous de la partie filetée du corps de la gaine et sensiblement au-dessous du point le plus bas atteint par la vis ou le tirefond de telle sorte qu'un corps étranger, par exemple un caillou, est sans effet sur la gaine d'ancrage et le béton environnant.

Dans le cas où la gaine à embout est utilisée dans un moule muni d'une aiguille tel que décrit plus haut, l'aiguille vient se ficher dans l'embout de telle sorte qu'après destruction de l'embout, il se forme dans le béton un puits d'écoulement.

Compte tenu des différences de dilatation thermique entre le métal de la coquille métallique et la matière synthétique du corps de la gaine, il est nécessaire de laisser un jeu entre le corps et la coquille métallique. Dans la gaine d'ancrage antérieure décrite dans le brevet FR 2 425 014, ce jeu est assuré en formant sur le corps en matière synthétique des saillies circulaires d'espacement. Dans la gaine d'ancrage selon l'invention, ce jeu de dilatation est de préférence obtenu de façon plus simple et plus efficace par des dépressions périphériques formées sur le corps au niveau des bossages périphériques d'ancrage, c'est-à-dire sur la partie active et fonctionnelle de la gaine.

Le dessin annexé représente, à titre d'exemple, deux modes d'exécution de l'invention.

La figure 1 est une vue en demi-coupe axiale d'une gaine d'ancrage noyée dans un élément de construction en béton, selon un premier mode d'exécution.

La figure 2 est une demi-coupe transversale selon II-II de la figure 1 et selon un plan de symétrie vertical.

La figure 3 est une vue en coupe axiale d'un second mode d'exécution.

La figure 4 est une coupe transversale selon IV-IV.

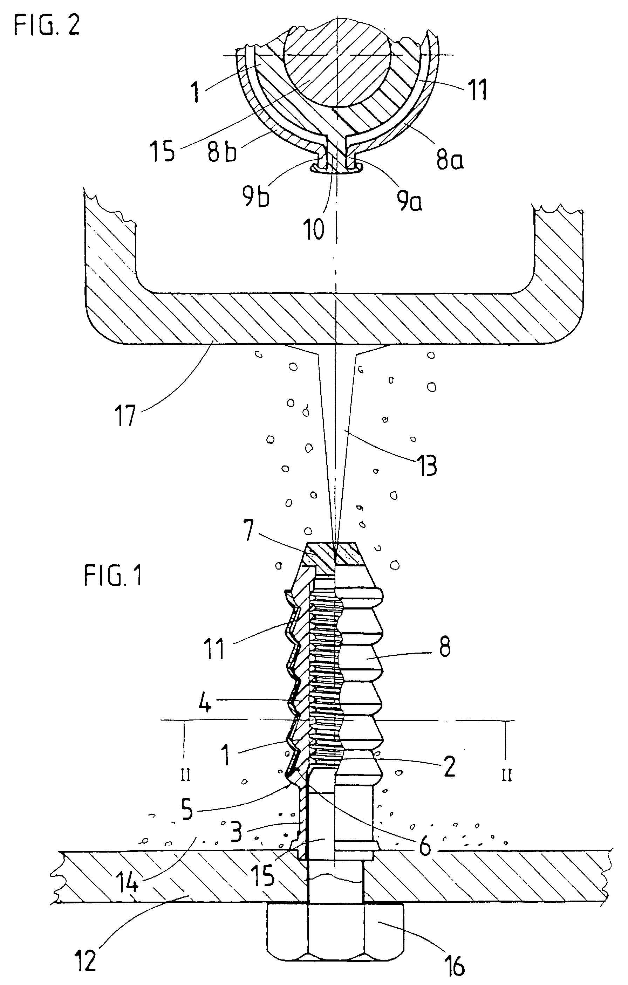

La gaine d'ancrage représentée à la figure 1 est constituée d'un corps tubulaire 1 en matière synthétique thermoplastique, par exemple en polyamide renforcé de fibres de verre, présentant intérieurement, sur la plus grande partie de sa longueur, un filet 2 de forme trapézoïdale analogue au filet trapézoïdal d'un tirefond non représenté. Dans sa partie supérieure le corps 1 présente une partie cylindrique lisse intérieurement. Autour de sa partie filetée, le corps 1 est pourvu de plusieurs bossages périphériques 4 de section sensiblement triangulaire à sommet arrondi, de telle sorte que chaque bossage est limité vers le haut par une première surface tronconique 5 et vers le bas par une seconde surface tronconique 6 sensiblement plus inclinée que la surface tronconique 5 dont l'inclinaison est d'environ 30° relativement à un plan perpendiculaire à l'axe de la gaine. Les surfaces tronconiques 5 ont pour fonction de répartir et de diriger les efforts de façon judicieuse, comme décrit dans le brevet FR 2 636 685. L'extrémité inférieure du corps tubulaire 3 est fermée par un embout 7 prolongeant et complètant le profil tronconique de l'extrémité du corps 1. Cet embout 7 est en matériau destructible, par exemple par dissolution, et de faible densité, par exemple en polystyrène expansé.

Le corps 1 est entouré, sur la plus grande partie de sa longueur, d'une coquille en acier 8 constituée de deux demi-coquilles 8a et 8b (figure 2) épousant la forme des bossages périphériques 4. Les demi-coquilles 8a et 8b présentent des bords verticaux coudés tels que 9a et 9b par lesquels les demi-coquilles sont fixées par bouterollage sur deux nervures longitudinales 10 diamétralement opposées du corps 1. Les demi-coquilles sont en contact avec les surfaces tronconiques 5, puisqu'elles constituent des interfaces mécaniques entre la gaine et le béton, alors qu'un jeu de dilatation 11 est formé entre le corps 1 et la coquille métallique 8 par des dépressions périphériques 6 formées dans les faces tronconiques 6. Ces dépressions ou empreintes sont faciles à obtenir par moulage. Les jeux de dilatation 11 ne sont prévus que dans les zones utiles et la coquille métallique 8 ne s'étend que sur environ 2/3 de la longueur totale du corps 1, ce qui permet de réaliser un gain important sur le coût de la gaine d'ancrage. La partie supérieure 3 de la gaine d'ancrage et son extrémité inférieure tronconique ne supportant pas d'efforts, un gainage métallique de ces parties n'est pas nécessaire.

On décrira maintenant un mode de mise en oeuvre de la gaine d'ancrage représentée aux figures 1 et 2.

Dans l'exemple de mise en oeuvre considéré, la gaine d'ancrage est noyée dans un élément en béton préfabriqué, par exemple une traverse de chemin de fer, lors du moulage de cet élément en béton en utilisant les systèmes de fixation en fond de moule classiques et connus. Après avoir fixé la gaine d'ancrage au fond 12 du moule au moyen d'un boulon 16, on dispose une aiguille 13, solidaire d'un support spécial 17, sur la partie supérieure du moule de telle manière que cette aiguille vient se ficher au moins approximativement axialement dans l'embout 7. Cet enfichage ne nécessite aucune précision. On coule ensuite le béton 14 dans le moule. Lors du démoulage, le retrait de l'aiguille 13 laisse subsister un puits pénétrant dans l'embout 7.

Ensuite, on élimine l'embout 7 en polystyrène expansé par dissolution, par exemple au moyen de quelques gouttes de trichloréthylène. L'élimination de l'embout laisse subsister une cavité correspondant avec le puits laissé par l'aiguille 13, puits qui constitue un puits d'écoulement pour l'eau ayant pénétré dans la gaine d'ancrage. L'étanchéité plus ou moins bonne du bouchon provisoire n'a donc plus aucune importance.

Si c'est une petite pierre ou un gravillon qui a pénétré dans la gaine d'ancrage, celui-ci tombera dans la cavité libérée par l'embout 7 sans risque que ce corps étranger soit atteint par l'extrémité du tirefond lors de son vissage dans la gaine d'ancrage.

Dans le cas d'une pose de la gaine d'ancrage dans un élément en béton préexistant, par perçage du béton et scellement de la gaine d'ancrage par collage, l'embout est éliminé de la même manière. Dans le cas d'un embout en polystyrène expansé éliminé au moyen de trichloréthylène, le produit de la réaction est très volatile, de telle sorte que l'embout disparaît instantanément.

L'embout 7 peut être constitué de tout matériau destructible au moyen d'un agent n'attaquant pas le corps en matière synthétique de la gaine d'ancrage.

Les demi-coquilles métalliques pourraient être fixées par clippage.

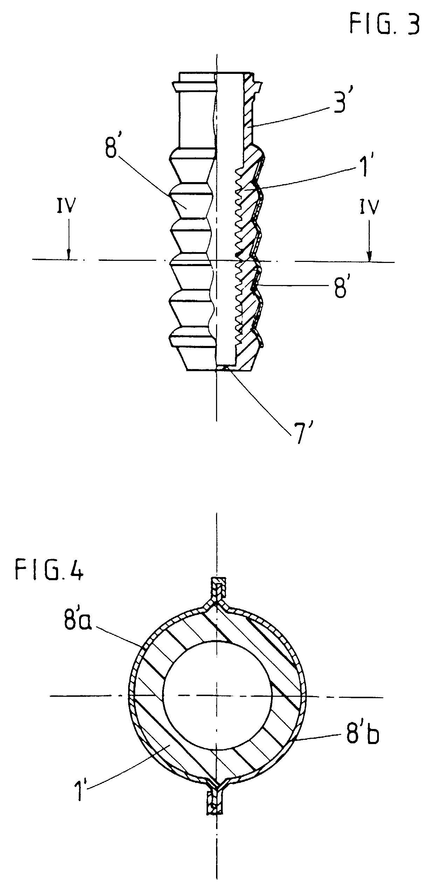

Dans le mode d'exécution représenté aux figures 3 et 4, dans lesquelles les pièces correspondant à la première forme d'exécution ont été désignées par les mêmes références accompagnées du signe ', l'embout 7 est remplacé par une paroi mince 7' venue d'une pièce avec le corps en matière plastique 1'. Cette paroi 7' est facilement perforable. La coquille métallique 8' est constituée de deux demi-coquilles identiques 8'a et 8'b fixées par sertissage, comme représenté à la figure 4. La fabrication de cette gaine d'ancrage est ainsi simplifiée, avec une économie de métal, tout en conservant les avantages connus de la gaine PLASTIRAIL.

Cette gaine d'ancrage peut être utilisée de la même manière que la gaine représentée à la figure 1, c'est-à-dire dans un moule comportant une aiguille 13 qui vient détruire par perforation la paroi mince 7' de manière à laisser subsister un puits communiquant avec l'intérieur de la gaine, après démoulage.

## Revendications

1. Gaine d'ancrage destinée à recevoir une vis dans un élément de construction en béton, constituée d'un corps tubulaire en matière synthétique (1) fermé à l'une de ses extrémités et présentant intérieurement un filet (2) correspondant au filet de la vis et, extérieurement, des bossages périphériques d'ancrage et de répartition des efforts (4), et deux nervures longitudinales (10), ce corps étant entouré d'une coquille métallique (8) constituée de deux demi-coquilles (8a, 8b) fixées sur les nervures longitudinales du corps en matière synthétique, caractérisée en ce que la coquille métallique (8) s'étend sur une partie seulement du corps en matière synthétique (1) de manière à laisser libre au moins l'extrémité fermée de ce corps, et en ce que ladite extrémité fermée est destructible.

2. Gaine d'ancrage selon la revendication 1, caractérisée en ce que l'extrémité fermée du corps tubulaire en matière synthétique est fermée par un embout (7) en matériau destructible.

3. Gaine d'ancrage selon la revendication 2, caractérisée en ce que le corps (1) est en polyamide et l'embout est en polystyrène expansé.

4. Gaine d'ancrage selon la revendication 1, caractérisée en ce que l'extrémité fermée du corps tubulaire en matière synthétique est fermée par une paroi (7') mince relativement à l'épaisseur de la paroi tubulaire du corps.

5. Gaine d'ancrage selon l'une des revendications 1 à 4, caractérisée en ce que la coquille métallique (8) s'étend exclusivement autour des bossages périphériques (4) et de la partie filetée du corps en matière synthétique.

6. Gaine d'ancrage selon la revendication 5, caractérisée en ce que la coquille métallique (8) s'étend sur une longueur égale à environ 2/3 de la longueur du corps en matière synthétique.

7. Gaine d'ancrage selon l'une des revendications 5 à 6, caractérisée en ce que les deux demi-coquilles métalliques (8a, 8b) sont identiques.

8. Gaine d'ancrage selon l'une des revendications 1 à 7, caractérisée en ce qu'un jeu radial de dilatation (11) est prévu entre le corps en matière synthétique et la coquille métallique, ce jeu étant assuré par des dépressions périphériques du corps (1) au niveau des bossages périphériques d'ancrage.

9. Procédé de mise en oeuvre de la gaine d'ancrage selon la revendication 1, dans un élément en béton obtenu par moulage, caractérisé en ce qu'on fixe d'abord dans le moule la gaine d'ancrage, puis on dispose dans le moule une aiguille (13), au moins approximativement dans l'axe de la gaine, de manière à ce que ladite aiguille vienne perforer l'extrémité fermée du corps tubulaire en matière synthétique, de telle sorte qu'après démoulage et positionnement vertical de la gaine, extrémité perforée en bas, on obtient un puits d'écoulement sous l'extrémité perforée de la gaine.

10. Procédé de mise en oeuvre de la gaine d'ancrage selon l'une des revendications 5 ou 6, dans un élément de construction en béton, caractérisé en ce qu'après avoir fixé la gaine d'ancrage dans le béton, on élimine l'embout (7) au moyen d'un solvant.

## Patentansprüche

1. Verankerungshülse, die dazu bestimmt ist, eine Schraube in einem Bauelement aus Beton aufzunehmen, wobei die Hülse aus einem aus Kunststoff gefertigten rohrförmigen Körper (1) besteht, welcher an einem seiner Enden geschlossen ist und innen ein dem Gewinde der Schraube entsprechendes Gewinde (2) und aussen Umfangsvorsprünge (4), die zur Verankerung und Lastverteilung dienen, sowie zwei Längsrippen(10) aufweist, und wobei dieser Körper von einer metallischen Schale (8) umgeben ist, die aus zwei auf den Längsrippen des aus Kunststoff gefertigten Körpers befestigten Halbschalen (8a, 8b) bestehen, dadurch gekennzeichnet, dass sich die metallische Schale (8) nur über einen Teil des Körpers (1) aus Kunststoff erstreckt, derart, dass wenigstens das geschlossene Ende dieses Körpers frei gelassen wird, und dass das erwähnte geschlossene Ende zerstört werden kann.

2. Verankerungshülse nach Anspruch 1, dadurch gekennzeichnet, dass das geschlossene Ende des rohrförmigen Körpers aus Kunststoff durch eine Kappe (7) aus zerstörbarem Material verschlossen ist.

3. Verankerungshülse nach Anspruch 2, dadurch gekennzeichnet, dass der Körper (1) aus Polyamid und die Kappe aus expandiertem Polystyrol besteht.

4. , Verankerungshülse nach Ansapruch 1, dadurch gekennzeichnet, dass das geschlossene Ende des rohrförmigen Körpers aus Kunststoff durch eine Wand (7') verschlossen ist, welche relativ zur Dicke der rohrförmigen Wand des Körpers dünn ist.

5. Verankerungshülse nach einem der Ansprüche 1 bis 4, dadurch gekennzeichnet, dass sich die metallische Schale (8) ausschliesslich um die Umfangsvorsprünge (4) und den Gewindeteil des Körpers aus Kunststoff erstreckt.

6. Verankerungshülse nach Anspruch 5, dadurch gekennzeichnet, dass sich die metallische Hülse (8) über eine Länge erstreckt, die ungefähr gleich 2/3 der Länge des Körpers aus Kunststoff ist.

7. Verankerungshülse nach einem der Ansprüche 5 bis 6, dadurch gekennzeichnet, dass die beiden Halbschalen (8a, 8b) identisch sind.

8. Verankerunghülse nach einem der Ansprüche 1-7, dadurch gekennzeichnet, dass zwischen dem Körper aus Kunststoff und der metallischen Hülse ein radiales Dilatationsspiel (11) vorgesehen ist, welches durch Umfangsvertiefungen des Körpers (1) in Höhe der peripheralen Verankerungsvorsprünge gewährleistet ist.

9. Verfahren zur Verwendung der Verankerungshülse nach Anspruch 1 in einem durch Giessen erhaltenen Betonelement, dadurch gekennzeichnet, dass man zunächst die Verankerungshülse in der Form befestigt un dann eine Nadel (13) wenigstens näherungsweise in der Hülsenachse derart anordnet, dass diese Nadel das geschlossene Ende des rohrförmigen Körpers aus Kunststoff perforiert, so dass man nach dem Entformen und der vertikalen Positionierung der Hülse, mit dem perforierten Ende nach unten, einen Entleerungsschacht unter dem perforierten Ende der Hülse erhält.

10. Verfahren zur Verwendung der Verankerungshülse nach einem der Ansprüche 5 oder 6 in einem Bauelement aus Beton, dadurch gekennzeichnet, dass man nach Befestigung der Verankerungshülse im Beton die Kappe (7) mittels eines Lösungsmittels entfernt.

## Claims

1. Anchoring sleeve intended to receive a screw in a concrete building element, the sleeve consisting of a tubular body (1) closed at one of its ends and made of synthetic material which on the inside has a screw thread (2) which corresponds to the screw thread of the screw and, on the outside, has peripheral anchorage and load-spreading bosses (4) and two longitudinal ribs (10), this body being surrounded by a metal shell (8) consisting of two half-shells (8a, 8b) fixed to the longitudinal ribs of the body made of synthetic material, characterized in that the metal shell (8) stretches only over part of the body (1) made of synthetic material so as to leave at least the closed end of this body free, and in that the said closed end can be destroyed.

2. Anchoring sleeve according to Claim 1, characterized in that the closed end of the tubular body made of synthetic material is closed by an end cap (7) made of a material which can be destroyed.

3. Anchoring sleeve according to Claim 2, characterized in that the body (1) is made of polyamide and the end cap is made of expanded polystyrene.

4. Anchoring sleeve according to Claim 1, characterized in that the closed end of the tubular body made of synthetic material is closed by a wall (7') which is thin relative to the thickness of the tubular wall of the body.

5. Anchoring sleeve according to one of Claims 1 to 4, characterized in that the metal shell (8) stretches exclusively around the peripheral bosses (4) and around the threaded part of the body made of synthetic material.

6. Anchoring sleeve according to Claim 5, characterized in that the metal shell (8) stretches over a length equal to approximately 2/3 of the length of the body made of synthetic material.

7. Anchoring sleeve according to one of Claims 5 to 7, characterized in that the two metal half-shells (8a, 8b) are identical.

8. Anchoring sleeve according to one of Claims 1 to 7, characterized in that a radial expansion clearance (11) is provided between the body made of synthetic material and the metal shell, this clearance being provided by peripheral depressions in the body (1) in the region of the peripheral anchoring bosses.

9. Method for using the anchoring sleeve according to Claim 1 in a concrete element obtained by casting, characterized in that the anchoring sleeve is first of all fixed into the mould and then a spike (13) is arranged in the mould, at least approximately along the axis of the sleeve, so that the said spike can perforate the closed end of the tubular body made of synthetic material so that after mould release and vertical positioning of the sleeve the perforated end thereof being below a drainage well is obtained under the perforated end of the sleeve.

10. Method for using the anchoring sleeve according to one of Claims 5 or 6, in a concrete building element, characterized in that after the anchoring sleeve has been fixed into the concrete, the end cap (7) is eliminated using a solvent.
